# EUROPÄISCHE PATENTANMELDUNG

(11) **EP 2 027 958 A2**
(43) Veröffentlichungstag der Anmeldung: **25.02.2009**
(21) Anmeldenummer: 08014826.5
(22) Anmeldetag: 21.08.2008
(51) Int. Cl.: B23C 5/24, B23C 5/06, B23C 5/18

(54) **Monoblock-Planfräser**

(30) Priorität: 24.08.2007 DE 202007011816 U
(71) Anmelder: Jakob Lach GmbH & Co. KG, 63452 Hanau (DE)
(72) Erfinder: Maurer, Eugen, 61239 Ober-Mörlen (DE)
(74) Vertreter: Jochem, Bernd

(57) **Zusammenfassung**

Der Monoblock-Planfräser hat einen Fräserkörper (10), an dem Schneidplatten (16) aus polykristallinem Diamant (PKD) monokristallinem Diamant (MKD) oder polykristallinem Bornitrit (PKB) materialschlüssig befestigt sind. Um eine bessere Oberflächengüte der gefrästen Flächen erzeugen zu können, ist der Fräserkörper (10) mit wenigstens zwei sich im wesentlichen axial erstreckenden, stirnseitig offenen Bohrungen (26) versehen, in denen axial einstellbare Schlichteinsätze (18) festlegbar sind. Auch sie können mit materialschlüssig befestigten Schneidplatten (22) aus PKD, MKD oder PKB bestückt sein. Vorzugsweise sind die Schneidkanten der Schneidplatten (22) der Schlichteinsätze (18) vorwölbend gekrümmt. Der axial am weitesten vorgewölbte Punkt dieser Schneidkanten liegt auf einem Schlichtkreisdurchmesser, der maximal 4 bis 8 mm kleiner ist als der von den am äußeren Umfang des Fräserkörpers (10) angeordneten Schneidkanten erzeugte Durchmesser.

## Beschreibung

Die Erfindung betrifft Monoblock-Planfräser mit an einem Fräserkörper materialschlüssig befestigten Schneidplatten aus polykristalinem Diamant (PKD), monokristallinem Diamant (MKD) oder polykristallinem Bornitrit (PKB).

Ein derartiger Monoblock-Planfräser ist in dem Gebrauchsmuster 203 03 520.8 beschrieben. Er hat gegenüber herkömmlichen Planfräsern mit Wendeplatten oder Wechselkassetten den Vorteil, dass wesentlich mehr Schneidplatten am Umfang eines Fräserkörpers bestimmter Größe angebracht werden können, so dass eine höhere Zerspanungsleistung erzielt wird. Außerdem können Monoblock-Fräser mit höheren Drehzahlen und Schnittgeschwindigkeiten bis 7000 m/min gefahren werden, ohne dass die Genauigkeit darunter leidet. Fräser mit durch Schrauben befestigten Wendeplatten und Wechselkassetten werden bei so hohen Zentrifugalkräften labil. Der Erfindung liegt die Aufgabe zugrunde, einen Planfräser zu schaffen, der unter Beibehaltung der Vorteile des genannten Monoblock-Planfräsers eine noch bessere Oberflächengüte erzeugt.

Vorstehende Aufgabe wird erfindungsgemäß dadurch gelöst, dass bei einem Monoblock-Planfräser der eingangs genannten Art in wenigstens zwei sich im wesentlichen axial erstreckenden, stirnseitig offenen Bohrungen des Fräserkörpers axial einstellbare Schlichteinsätze festlegbar sind.

Eigentlich widerspricht die lösbare Befestigung der Schlichteinsätze dem Prinzip des Monoblock-Planfräsers, durch materialschlüssige Befestigung der Schneidkörper besonders hohe Drehzahlen und Schnittgeschwindigkeiten zu ermöglichen. Es hat sich jedoch herausgestellt, dass Bedenken in dieser Hinsicht unbegründet sind, da die Schlichteinsätze in axialen oder im wesentlichen axialen Bohrungen sitzen und darin gegen hohe Zentrifugalkräfte zuverlässig formschlüssig gehalten sind.

Im Rahmen des gesamten Konzepts ist es vorteilhaft, wenn auch die Schlichteinsätze mit materialschlüssig befestigten Schneidplatten aus PKD, MKD oder PKB bestückt sind. Mittels der Schlichteinsätze lässt sich die Rauhtiefe der erzeugten Planflächen von etwa 8 bis 15 µ auf weniger als 5 µ verbessern.

In der bevorzugten praktischen Ausführung ist jeder Schlichteinsatz mittels einer Schraube mit zwei gegenläufigen Gewinden, die mit passenden Gewindebohrungen im Fräserkörper bzw. im Schlichteinsatz zusammenwirken, axial einstellbar und in der eingestellten Lage mittels einer Klemmschraube in der axialen Bohrung festlegbar. Auf diese Weise ist eine stufenlose Einstellung der Schlichteinsätze möglich.

Es hat sich als zweckmäßig erwiesen, dass sich die Schneidkanten der Schneidplatten der Schlichteinsätze mit Bezug auf die Drehachse des Fräserkörpers jeweils radial oder mit einer radialen Richtungskomponente erstrecken und mit einem Radius von 75 bis 125 mm vorwölbend gekrümmt sind. Dabei sollte der axial am weitesten vorgewölbte Punkt der Schneidkante der Schlichteinsätze mit Bezug auf die Drehachse des Fräserkörpers auf einem Schlichtkreisdurchmesser liegen, der maximal 4 bis 8 mm kleiner ist als der von den Mantelschneiden der materialschlüssig am Fräserkörper befestigten Schneidplatten erzeugte Durchmesser.

Die Erfindung wird nachstehend anhand eines in der Zeichnung gezeigten Ausführungsbeispiels näher erläutert. Es zeigen:
- Fig. 1: eine perspektivische Ansicht eines mit Schneidplatten aus PKD bestückten Monoblock-Planfräsers mit drei Schlichteinsätzen;
- Fig. 2: eine Stirnansicht des Fräswerkzeugs nach Fig. 1
- Fig. 3: eine Draufsicht auf eine Mantelschneide des Fräswerkzeugs nach Fig. 1 und 2 und
- Fig. 4: eine Draufsicht auf die Schneidplatte eines Schlichteinsatzes im montierten Zustand.

Der als Ausführungsbeispiel gezeigte Planfräser besteht aus einem Fräserkörper 10 aus Werkzeugstahl, der mittels einer Schraube 11 befestigt wird und mindestens an dem schneidend wirksamen Stirnende mit gleichmäßig über den Umfang verteilten Ausnehmungen 12 versehen ist, zwischen denen Zähne 14 gebildet sind. Jeweils auf der während des Schneidvorgangs vorauseilenden Flanke der Zähne 14 ist eine Schneidplatte 16 aufgelötet, die aus einer Schicht aus polykristallinem Diamant in fester Verbindung mit einer Trägerschicht aus Hartmetall besteht. Die Schicht aus Hartmetall lässt sich mit der vorgesehenen Tragfläche auf der vorauseilenden Zahnflanke des Fräserkörpers 10 fest verlöten.

Die Geometrie des Fräserkörpers 10 und der Schneidplatten 16 richtet sich nach den Erfordernissen des Einzelfalls. Die Form und Größe der Ausnehmungen 12 ist so zu bemessen, dass eine übliche Bearbeitung der Schneidplatten 16 mit herkömmlichen Diamantbearbeitungsverfahren zum Nachschärfen der Schneidplatten 16 möglich ist. Wie gezeigt, lassen die notwendigen Ausnehmungen 12 grundsätzlich die Unterbringung von 12 Schneidplatten am Umfang eines Fräsers mit einem Durchmesser von 100 mm zu.

Es versteht sich, dass bei vorhandenen Fertigungstechnologien die Schneidplatten 16 auch in anderer Weise als durch Löten am Fräserkörper 10 befestigt werden können. Dabei besteht ggf. auch die Möglichkeit, Schneidplatten 16, die nur aus PKD oder PKB bestehen, also keine Unterlage aus Hartmetall haben, einzusetzen.

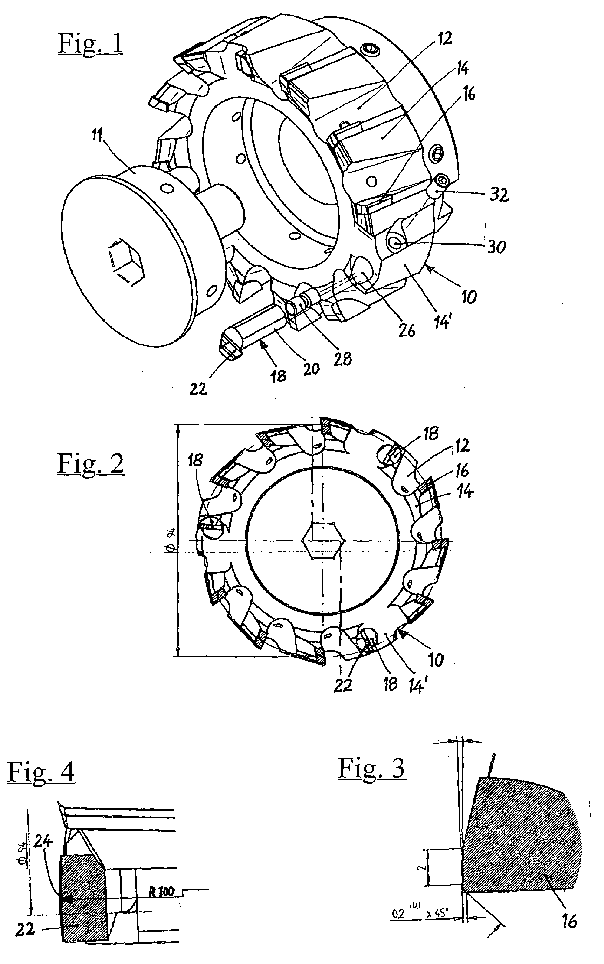

Die Schneidplatten 16 sind Mantelschneiden, die gemäß Fig. 3 eine längere Schneidkante am äußeren Umfang, im Ausführungsbeispiel auf dem Radius 50 mm) haben und mit einer kurzen Schneidkante von etwa 2 mm Länge auch stirnseitig schneiden bzw. glätten. Wenn das Fräswerkzeug nur mit derartigen Schneidplatten 16 bestückt ist, erreicht man auf der erzeugten Planfläche nur eine verhältnismäßig grobe Rauhtiefe von etwa 8 bis 15 µ.

Das gezeigte neue Fräswerkzeug hat deshalb zusätzlich zu den als Mantelschneiden und Stirnschneiden arbeitenden Schneidplatten 16 drei stirnseitig wirkende Schlichteinsätze 18, bestehend jeweils aus einem mit einer abgeflachten Spannfläche zur Drehsicherung und Klemmung versehenen Schaft 20 und einer auf ein stufenförmig abgesetztes Ende aufgelöteten Schneidplatte 22, die während des Planfräsens die erzeugte Planfläche schlichtet. Gemäß Fig. 4 ist die auf der Planfläche wirksame Schneidkante 24, wie in Fig. 4 angegeben, mit einem Krümmungsradius von 75 bis 800 mm axial nach außen gekrümmt ausgebildet, wobei die Stelle des weitesten axialen Vorsprungs der gekrümmten Schneidkante 24 auf einem Radius von 47 mm liegt. Diese Stelle maximalen axialen Vorsprungs der Schneidkanten 24 liegt somit radial weiter innen als der von den Schneidplatten 16 stirnseitig bearbeitete Bereich von im Beispielsfall 2 mm Breite. Dieser Sachverhalt lässt sich mit anderen Worten auch so ausdrücken, dass der Schlichtkreisdurchmesser von 94 mm kleiner ist als der Durchmesser des von den Schneidplatten 16 stirnseitig bearbeiteten Bereichs.

Die Schlichteinsätze 18 sitzen jeweils in einer passenden axialen oder hauptsächlich axialen Bohrung 26 in einem breiter ausgebildeten Zahn 14' des Fräserkörpers 10. Diese Bohrung ist in ihrem hinteren Bereich verjüngt und als Gewindebohrung ausgebildet, in die eine in Fig. 1 gezeigte madenförmige Stellschraube 28 mit zwei gegenläufigen Gewindeabschnitten einschraubbar ist. Der andere der beiden gegenläufigen Gewindeabschnitten der Stellschraube 28 ist in eine passende Gewindebohrung im hinteren Ende des Schlichteinsatzes einschraubbar. Wenn die Stellschraube 28 mit dem einen Gewindeabschnitt in den Fräserkörper 10 und mit dem anderen Gewindeabschnitt in den Schlichteinsatz 18 eingeschraubt ist, kann letzterer durch Drehen der Schraube 28 axial eingestellt werden, ohne dabei in der Bohrung 26 gedreht werden zu müssen. Die Schraube 28 hat im Beispielsfall in ihrem hinteren Ende einen Innensechskant, so dass sie sich mittels eines zum Innensechskant passenden Schraubendrehers, der von hinten in die Durchgangsbohrung 26 einführbar ist, gedreht werden kann. Wenn mittels der Schraube 28 eine bestimmte axiale Lage des Schlichteinsates 18 eingestellt worden ist, kann dieser mit Hilfe einer Klemmschraube 32 festgeklemmt werden, die in eine sich etwa tangential oder schräg zur tangentialen Richtung in den Zahn 14' und die Durchgangsbohrung 26 erstreckende Gewindebohrung 30 einschraubbar ist.

Das Fräswerkzeug nach Fig. 1 hat drei gleichmäßig über den Umfang verteilte Schlichteinsätze 18. Je nach Ausbildung und Umfangsabstand der Schneidplatten 16 und Zähne 14 besteht ggf. die Möglichkeit, auch auf den Vorderflanken derjenigen Zähne 14', die mit einer Bohrung 26 versehen sind, eine Schneidplatte 16 anzulöten. Wenn dies aus Platzgründen nicht möglich ist, kann man, wie im Ausführungsbeispiel, den die Schlichteinsätze 18 tragenden Zähnen 14' eine andere Form geben und darauf verzichten, an diesen Zähnen auch eine Schneidplatte 16 anzubringen.

## Patentansprüche

1. Monoblock-Planfräser mit an einem Fräserkörper (10) materialschlüssig befestigen Schneidplatten (16) aus polykristalinem Diamant (PKD), monokristallinem Diamant (MKD) oder polykristallinem Bornitrit (PKB), **dadurch gekennzeichnet, dass** in wenigstens zwei sich im wesentlichen axial erstreckenden, stirnseitig offenen Bohrungen (26) des Fräserkörpers (10) axial einstellbare Schlichteinsätze (18) festlegbar sind.

2. Planfräser nach Anspruch 1, **dadurch gekennzeichnet, dass** auch die Schlichteinsätze (18) mit materialschlüssig befestigten Schneidplatten (22) aus PKD, MKD oder PKB bestückt sind.

3. Planfräser nach Anspruch 1 oder 2, **dadurch gekennzeichnet, dass** jeder Schlichteinsatz (18) mittels einer Schraube (28) mit zwei gegenläufigen Gewinden, die mit passenden Gewindebohrungen im Fräserkörper (10) und im Schlichteinsatz (18) zusammenwirken, axial einstellbar und mittels einer Klemmschraube (32) in der axialen Bohrung (26) festlegbar sind.

4. Planfräser nach einem der Ansprüche 1 bis 3, **dadurch gekennzeichnet, dass** sich die Schneidkanten (24) der Schneidplatten (22) der Schlichteinsätze (18) mit Bezug auf die Drehachse des Fräserkörpers (10) jeweils radial oder mit einer radialen Richtungskomponente erstrecken und mit einem Radius von 75 bis 800 mm vorwölbend gekrümmt sind.

5. Planfräser nach Anspruch 4, **dadurch gekennzeichnet, dass** der axial am weitesten vorgewölbte Punkt der Schneidkante (24) der Schlichteinsätze (18) mit Bezug auf die Drehachse des Fräserkörpers (10) auf einem Schlichtkreisdurchmesser liegt, der maximal 4 bis 8 mm kleiner ist als der von den am äußeren Umfang des Fräserkörpers (10) angeordneten Schneidkanten erzeugte Durchmesser.
